## Europäisches Patentamt
## European Patent Office
## Office européen des brevets

(11) Veröffentlichungsnummer: **0 245 749**
**B1**

# EUROPÄISCHE PATENTSCHRIFT

(45) Veröffentlichungstag der Patentschrift: **06.02.91**

(51) Int. Cl.⁵: **H 02 K 23/04**

(21) Anmeldenummer: **87106453.1**

(22) Anmeldetag: **05.05.87**

(54) Permanenterregter Gleichstrommotor.

(30) Priorität: **10.05.86 DE 3615784**

(43) Veröffentlichungstag der Anmeldung:
**19.11.87 Patentblatt 87/47**

(45) Bekanntmachung des Hinweises auf die
Patenterteilung:
**06.02.91 Patentblatt 91/06**

(84) Benannte Vertragsstaaten:
**DE FR GB**

(56) Entgegenhaltungen:
| | |
|---|---|
| DE-A-3 213 172 | US-A-3 312 846 |
| GB-A-1 581 350 | US-A-3 487 246 |
| GB-A-2 080 046 | US-A-3 663 851 |
| US-A-3 196 302 | US-A-3 668 452 |
| US-A-3 259 768 | US-A-4 465 951 |

PATENT ABSTRACTS OF JAPAN, Band 6, Nr.
155 (E-125)1033r, 17. August 1982; & JP - A - 57
78359

(73) Patentinhaber: Hoesch Aktiengesellschaft
Eberhardstrasse 12
D-4600 Dortmund 1 (DE)

(72) Erfinder: Sieverding, Heinz, Dipl.-Ing.
Königsberger Strasse 19
D-8756 Kahl (DE)
Erfinder: Ebert, Reinhold, Dipl.-Ing.
Weinbergstrasse 6a
D-6100 Darmstadt (DE)
Erfinder: Lang, Helmut, Ing.
Schlossweg 13
D-6909 Walldorf (DE)

Courier Press, Leamington Spa, England.

**Beschreibung**

Die Erfindung bezieht sich auf einen formschlußlosen, permanenterregten Gleichstrommotor gemäß dem Oberbegriff des Anspruchs 1.

Ein solcher permanenterregter Gleichstrommotor ist aus der DE—A1—32 13 172 bekannt. Dort wird ein formschlußloser, entkoppelter, elektromotorischer Drehantrieb für Geschütz- und Panzertürme beschrieben, wobei der Drehantrieb ein Torque-Ring-Motor ist, dessen Stator am feststehenden Unterteil und dessen Rotor am drehbaren Oberteil angeflanscht ist. Der Torque-Ring-Motor ist im Prinzip ein permanenterregter Gleichstrommotor mit Nebenschluß-Charakteristik. Die Ankerwicklung ist in Form von strahlenförmigen Lamellen in Stabform ringartig angeordnet. Die Kommutierung erfolgt direkt auf den Ankerstäben. Damit entfällt der besondere, vom Gleichstrommotor üblicher Bauart her bekannte Kommutator. Der Feldaufbau erfolgt mittels Dauermagenten, die sowohl über als auch unter dem Läuferring angeordnet sind. Der Magnet-Rückschluß erfolgt über Stahlträgerringe.

Der Erfindung liegt davon ausgehend die Aufgabe zugrunde, einen formschlußlosen, permanenterregten Gleichstrommotor der eingangs genannten Art anzugeben, der universell zum Direktantrieb großer drehbarer Einrichtungen, wie Radaranlagen, Drehkräne usw. im Bereich kleiner Drehfrequenzen geeignet ist, dabei sehr hohe Drehmomente entwickeln kann und eine sehr hohe mechanische Stabilität aufweist.

Diese Aufgabe wird in Verbindung mit den Merkmalen des Oberbegriffs erfindungsgemäß durch die im Kennzeichen des Anspruchs 1 angegebenen Merkmale gelöst.

Vorteilhafte Ausgestaltungen der Erfindung sind in den Unteransprüchen gekennzeichnet.

Aus der GB—A—1 581 350 ist ein Gleichstrommotor für kleine Drehfrequenzen bekannt, wobei Gehäuse und Spulenring, der aus einem Sintermetall besteht, allerdings aus zwei Teilen aufgebaut sind, so daß dieser Stand der Technik keinerlei Anregung zu der erfindungsgemäßen Ausbildung geben konnte.

Die mit der Erfindung erzielbaren Vorteile bestehen insbesondere darin, daß der permanenterregte Gleichstrommotor universell als Stellantrieb bzw. Direktantrieb ohne Getriebe im Bereich kleiner bis kleinster Drehfrequenzen einsetzbar ist. Durch Fortfall des bei Einsatz eines Getriebes nicht auszuschließenden Flankenspiels wird eine äußerst exakte Positionierung möglich. Im Vergleich zum Gleichstrommotor nach der DE—A1—32 13 172 ergibt sich ein geringerer Luftspalt, eine höhere mechanische Steifigkeit und eine wirtschaftlichere Bauart, insbesondere sind weniger Dauermagnete notwendig. Der Antrieb erfolgt fast völlig verschleißfrei, reibungslos und mit hoher Dynamik. Auch im Stillstand kann das maximale Moment abgegeben werden.

Fig. 2 eine Ansicht auf den Magnetträgerring des Gleichstrommotors,

Fig. 3 eine Ansicht auf den Spulenträgerring des Gleichstrommotors,

Fig. 4 eine zweite Ausführungsvariante des Permanenterregten Gleichstrommotors.

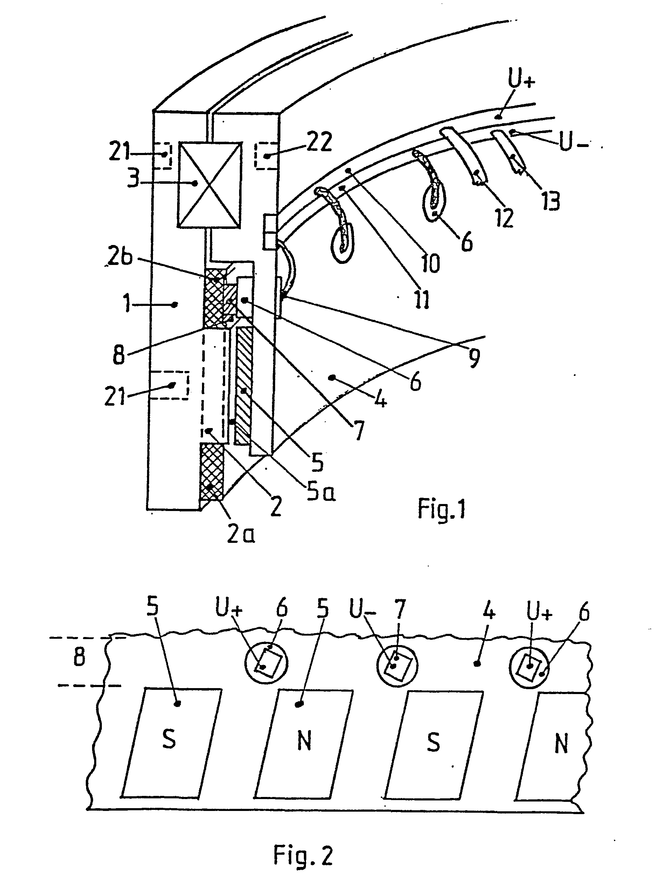

In Fig. 1 ist eine erste Ausführungsvariante des permanenterregten Gleichstrommotors dargestellt. Der Motor weist als Hauptbauteile einen senkrecht zur Rotationsebene angeordneten Spulenträgerring 1 mit Gleichstromwicklung 2, ein Drehlager 3 und einen senkrecht zur Rotationsebene angeordneten Magnetträgerring 4 mit einer Vielzahl von Dauermagneten 5 und einer Vielzahl von Bürstenhaltern 6 mit darin geführten Kohlebürsten 7 auf. Der Spulenträgerring 1 ist auch im Bereich der Wicklung 2 nicht lamelliert, sondern massiv ausgeführt.

Der Verzicht auf eine Lamellierung des Blechpaketes ist möglich, da der Gleichstrommotor im Bereich kleiner und kleinster Drehzahlen betrieben werden soll und dementsprechend nur kleine Ummagnetisierungsfrequenzen auftreten. Die Vorteile der massiven Ausführung des Spulenträgerrings 1 bestehen einmal darin, daß die Bearbeitung einfacher und die Herstellung preisgünstiger wird, vor allem jedoch darin, daß der Spulenträgerring 1 mechanisch sehr stabil wird. Der Nachteil der höheren Eisenverluste ist aufgrund der auftretenden kleinen Frequenzen vernachlässigbar.

Zur Einlage der Wicklung 2 ist der Spulenträgerring 1 mit Nuten und Zähnen versehen. Die Wicklung 2 besteht aus massiven Kupferstäben, die in Unter- und Oberlage isoliert in die Nuten eingelegt sind. Jeweils an den Enden der Wickelköpfe 2a, 2b sind die einzelnen Kupferstäbe miteinander verlötet.

Die Dauermagnete 5 befinden sich auf dem Magnetträgerring 4 gegenüber der Wicklung 2, getrennt durch einen schmalen magnetischen Luftspalt 5a. Die Dauermagnete 5 sind vorzugsweise in Einfräsungen oder Bohrungen des Magnetträgerrings 4 eingeklebt und zwar folgt längs des Umfanges jeweils abwechselnd ein Nordpol auf einen Südpol. Es können z.B. 60 Polpaare, d.h. 60 Nordpole und 60 Südpole längs des Umfanges des Magnetträgerringes 4 vorgesehen sein.

In Höhe des Wickelkopfes 2b sind auf dem Magnetträgerring 4 Bürstenhalter 6 vorgesehen, und zwar kann zwischen zwei Polen je ein Bürstenhalter 6 liegen, d.h. bei 60 Polpaaren können bis zu 120 Bürstenhalter 6 vorhanden sein. Die Anzahl der Kohlebürsten 7 muß jedoch nicht mit der Anzahl der Pole übereinstimmen. Bei Reduzierung der Kohlebürsten auf den halben bzw. auf einen noch kleineren Wert sind gegebenenfalls wirtschaftliche Vorteile zu erzielen. Zur Kontaktierung mit den Kohlebürsten 7 weist der Wickelkopf 2b eine Bearbeitung zur Bildung einer Kommutatorfläche 8 auf. Infolge der Stromübertragung direkt auf den Wickelkopf 2b ergibt sich eine gleichmäßige Erwärmung im Vergleich zur konventionellen Kommutator-Maschine, selbst bei einer Momenterzeugung im dauernden Stillstand, da alle Kohlebürsten 7 gleichzeitig stromführend sind.

Die Stromversorgung der Kohlebürsten 7 erfolgt über Litzen 9, die einerseits in die Kohlebürsten 7 eingepreßt sind, andererseits mit Sammelringen 10, 11 verbunden, vorzugsweise hartverlötet sind. Längs des Umfanges ist abwechselnd eine Kohlenürste 7 mit der Sammelleitung 10 und die benachnarte Kohlebürste mit der Sammelleitung 11 verbunden. Daneben ist es auch möglich, die Kohlebürsten 7 jeweils gruppenweise mit je einem Sammelring zu verbinden. Prinzipiell ist es ferner möglich, die Kohlebürsten 7 lediglich auf Teilen längs des Umfanges des Magnetträgerringges 4 anzuordnen, was Raumvorteile bringen kann. Bei der Anordnung der Kohlebürsten ist vor allem zu beachten, daß die elektromagnetische Abstrahlung und Beeinträchtigung benachbarter Geräteeinbauten vermieden oder zumindest minimiert wird. Die beiden Sammelringe 10, 11 sind isoliert in Einfräsungen des Magnetträgerrings 4 eingelegt. Die Stromversorgung der Sammelringe 10 bzw. 11 erfolgt jeweils über mindestens zwei Anschlußkabel 12 bzw. 13. Um den Querschnitt der Sammelringe möglichst gering zu halten, sind beispielsweise jeweils 4 derartiger Anschlußkabel 12, 13 in gleichmäßigen (bzw. zweckmäßigen) Abständen längs des Umfanges der Sammelringe 10, 11 angebracht. Der Sammelring 10 wird dabei beispielsweise mit positiver Spannung $U_+$ und der Sammelring 11 mit negativer Spannung $U_-$ beaufschlagt. Durch Vertauschen erfolgt eine Drehrichtungsumkehr des Rotors. Die Anordnung der Sammelringe 10, 11 richtet sich prinzipiell nach der Anordnung der Kohlebürsten 7. Die Sammelringe können zweipolig rundum durchgängig oder unterbrochen, zweipolig sektoral symmetrisch oder unsymmetrisch, einpolig jeweils am halben Umfang oder einpolig sektoral spiegelsymmetrisch oder unsymmetrisch angeordnet sein. Die Einspeisung des Motors soll so gelegt werden, daß die Abstrahlung des durch die Zuleitungen und die Sammelringe verursachten Magnetfeldes möglichst klein wird.

In Fig. 2 ist eine Ansicht auf den Magnetträgerring 4 des Gleichstrommotors dargestellt. Es sind vier Dauermagnete 5 zu erkennen, wobei die Nordpole mit N und die Südpole mit S bezeichnet sind. Aufgrund der Polschrägung ergeben sich vorteilhaft auch bei kleinsten Drehzahlen keine Momentenpulsationen und es bilden sich keine bevorzugten Rotorstellungen aus. Anstelle der Polschrägung kann auch eine Nutschrägung vorgesehen sein.

Oberhalb der Dauermagnete 5 im Bereich der angedeuteten Kommutatorfläche 8 des Wickelkopfes 2b befinden sich die Bürstenhalter 6 mit den Kohlebürsten. Die Schrägstellung der Bürstenhalter 6 ist dabei nach den Kupferstäben der Wicklung im Bereich der Kommutatorfläche 8 auf dem Wickelkopf 2b ausgerichtet. Es ist jeweils bezeichnet, ob die Kohlebürsten 7 mit positiver Spannung $U_+$ oder mit negativer Spannung $U_-$ beaufschlagt sind.

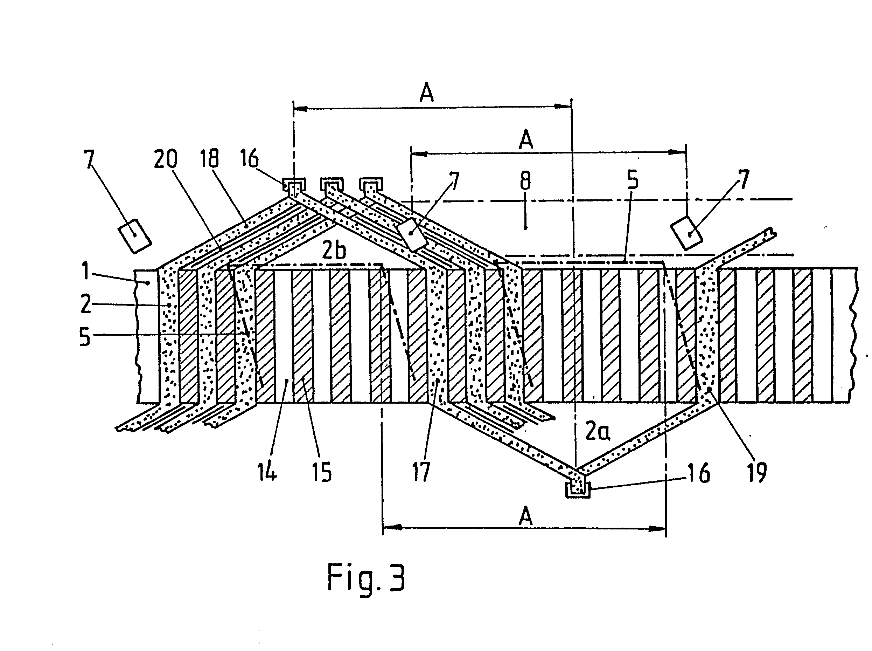

In Fig. 3 ist eine Ansicht auf den Spulenträgerring 1 des Gleichstrommotors dargestellt. Im Bereich der Wicklung 2 ist der Spulenträgerring 1 mit Nuten 14 und Zähnen 15 versehen. Die Wicklung 2 ist als Wellenwicklung mit Ober- und Unterstäben aus Kupfer ausgeführt. Die einzelnen Stäbe sind jeweils an den Enden der Wickelköpfe 2a und 2n miteinander hartverlötet. Die Lötstellen sind mit 16 bezeichnet. Beim Stab 17 handelt es sich beispielsweise um einen Oberstab, d.h. der Stab nimmt die Oberlage in der Nut 14 ein. Der Oberstan 17 ist am Ende des Wickelkopfes 2b mit dem Unterstab 18 und am Ende des Wickelkopfes 2a mit dem Unterstab 19 verlötet. Die Unterstäbe 18, 19 nehmen jeweils die Unterlagen in den Nuten 14 ein. Der räumliche Abstand zwischen der Lötstelle 16 der Stäne 17, 18 und der Lötstelle 16 der Stäne 17, 19 ist mit A bezeichnet. Dieser Abstand A entspricht ebenfalls dem räumlichen Abstand A zwischen zwei Kohlebürsten 7 bzw. ebenfalls dem räumlichen Abstand zwischen zwei Dauermagneten 5 des Magnetträgerrings 4. Zur Darstellung dieser räumlichen Abstände A sind drei Kohlebürsten 7 und zwei Dauermagnete 5 in die Darstellung des bewickelten Spulenträgerrings 1 skizziert.

Zwischen den einzelnen Stäben der Wicklung 2 sind jeweils Isolierstücke 20 eingelegt. Wie bereits erwähnt, sind die Stäbe im Bereich des Wickelkopfes 2b leicht abgefräst bzw. angedreht, um eine ebene Kommutatorfläche 8 für die Kohlebürsten 7 zu erhalten.

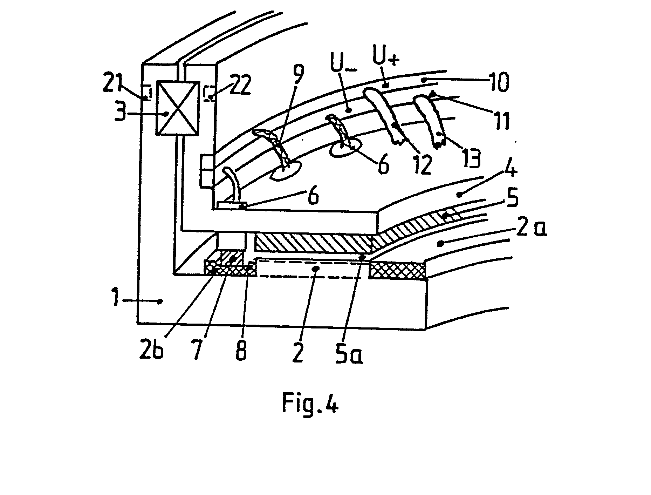

In Fig. 4 ist eine zweite Ausführungsform des permanenterregten Gleichstrommotors dargestellt. Im Unterschied zur Variante gemäß Fig. 1 sind der Spulenträgerring 1 und der Magnetträgerring 4 hierbei nicht senkrecht, sondern waagerecht zur-Rotationsebene angeordnet. Es sind wiederum die Wicklung 2 mit den beiden Wikkelköpfen 2a, 2n und der Kommutatorfläche 8, die Dauermagnete 5, der magnetische Luftspalt 5a, die Bürstenhalter 6 mit Kohlebürsten 7, die Litzen 9, die Sammelringe 10, 11, die Anschlußkabel 12, 13 und das Drehlager 3 zu erkennen.

Der Spulenträger 1 des Gleichstrommotors kann entweder als Stator oder als Rotor eingesetzt werden. Bei Verwendung des Spulenträgerrings 1 als Stator fungiert der Magnetträgerring 4 als Rotor. Der Magnetträgerring 4 wird dann mit dem drehbaren Teil der anzutreibenden Einrichtung verbunden (z.B. über Verschraubungen 22), während der Spulenträgerring 1 am feststehenden Teil der anzutreibenden Einrichtung angebracht wird (z.B. ebenfalls über Verschraubungen 21). Bei Verwendung des Spulenträgerrings 1 als Rotor fungiert der Magnetträgerring 4 als Stator. Der Magnetträgerring 4 wird dann mit dem feststehenden Teil und der Spulenträgerring 1 mit dem drehbaren Teil der anzutreibenden Einrichtung verbunden.

In den Zeichnungen gemäß Fig. 1 und 4 ist jeweils beispielhaft dargestellt, daß der Spulenträgerring 1 als Außenring und der Magnetträgerring 4 als Innenring des Gleichstrommotors ausgebildet sind. Es ist darüberhinaus jedoch auch möglich, den Magnetträgerring 4 als Außenring und den Spulenträgerring 1 als Innenring auszubilden. Auch in diesem Fall können Spulenträgerring 1 und Magnetträgerring 4 jeweils wahlweise als Rotor oder Stator fungieren.

Der permanenterregte Gleichstrommotor kann als hochdynamischer Regelantrieb eingesetzt werden. Die Drehrichtungsumkehr kann nis zu ungefähr 1000 pro Sekunde betragen. Das hat zur Folge, daß sich die Polarität der Sammelringe 10, 11 nis zu 1000 mal pro Sekunde ändert.

Der beschriebene permanenterregte Gleichstrommotor eignet sich bevorzugt zum Direktantrieb von Radaranlagen, Satellitennachführantennen, Drehkränen, Werkzeugmaschinen-Drehtischen, Computertomographen und Panzertürmen. Es sind vorzugsweise Drehzahlen im Bereich 10 U/min bis 1/1000 U/min realisiernar. Auch bei kleinsten Drehzahlen bzw. im Stillstand wird das maximale Drehmoment aufgebracht. Die Speisung des Gleichstrommotors erfolgt vorzugsweise über einen geregelten Stromrichter.

## Patentansprüche

1. Formschlußloser, permanenterregter Gleichstrommotor in mittenfreier Ausbildung als Direktantrieb mit einem Spulenträgerring (1), auf dem eine Gleichstromwicklung (2) angeordnet ist, und einem Magnetträgerring (4) mit mehreren Dauermagneten (5), die über ein Drehlager (3) drehbeweglich miteinander verbunden sind, wobei ein Wickelkopf (2b) der Gleichstromwicklung (2) direkt als Kommutator mit Kohlebürsten (7) zusammenwirkt, dadurch gekennzeichnet, daß der Spulenträgerring (1) als massives Eisenteil ausgebildet ist und eine mit Nuten (14) versehene, die Gleichstromwicklung (2) aufnehmende Verdickung aufweist, und am Magnetträgerring (4) gegenüber der Verdickung des Spulenträgerringes (1) Dauermagnete (5) formschlüssig in Einfräsungen oder Bohrungen des Magnetträgerringes (4) angeordnet und vorzugsweise durch Kleben befestigt sind, wobei der Spulenträgerring (1) als Stator und als Außenring des Gleichstrommotors dient und die Kohlebürsten (7) in mehreren Bürstenhaltern (6) längs des Umfanges des Magnetträgerringes (4), der mit zwei Sammelringen (10, 11) vorgesehen ist, mit je einem Sammelring (10, 11) verbunden sind, wobei die Sammelringe (10, 11) mit positiver bzw. negativer Spannung über Anschlußkabel (12, 13) beaufschlagbar sind, und wobei die Dauermagnete (5) längs des Umfanges des Magnetträgerringes (4) abwechselnd als Nordpol (N) und Südpol (S) ausgebildet sind.

2. Gleichstrommotor nach Anspruch 1, dadurch gekennzeichnet daß sowohl Spulenträgerring (1) als auch Magnetträgerring (4) senkrecht zur Rotationsebene ausgebildet sind.

3. Gleichstrommotor nach Anspruch 1, dadurch gekennzeichnet, daß sowohl Spulenträgerring (1) als auch Magnetträgerring (4) waagerecht zur Rotationsebene ausgebildet sind.

4. Gleichstrommotor nach einem oder mehreren der Ansprüche 1 bis 3, dadurch gekennzeichnet, daß die Nuten (14) der Wicklung (2) schräg zur Drehachse oder zur Radialen angeordnet sind.

5. Gleichstrommotor nach einem oder mehreren der Ansprüche 1 bis 4, dadurch gekennzeichnet, daß die Pole (N, S) des Magnetträgerringes (4) schräg zur Drehachse oder zur Radialen angeordnet sind.

6. Gleichstrommotor nach einem oder mehreren der Ansprüche 1 bis 5, dadurch gekennzeichnet, daß die Anzahl der Dauermagnete (5) gleich der Anzahl der Kohlebürsten (7) ist.

7. Gleichstrommotor nach einem oder mehreren der Ansprüche 1 bis 5, dadurch gekennzeichnet, daß die Anzahl der Kohlebürsten (7) beliebig geringer als die Anzahl der Dauermagnete (5) ist.

8. Gleichstrommotor nach einem oder mehreren der Ansprüche 1 bis 7, dadurch gekennzeichnet, daß die Kohlebürsten (7) nur auf einem Teil des Umfanges des Magnetträgerringes (4) angeordnet sind.

9. Gleichstrommotor nach einem oder mehreren der Ansprüche 1 bis 8, dadurch gekennzeichnet, daß die Wicklung (2) als Wellenwicklung mit Ober- und Unterlage aus massiven Kupferstäben ausgeführt ist.

10. Gleichstrommotor nach einem oder mehreren der Ansprüche 1 bis 9, dadurch gekennzeichnet, daß die Sammelringe (10, 11) elektrisch isoliert in einer oder mehreren umlaufenden Nuten des Magnetträgerringes (4) angeordnet sind.

11. Gleichstrommotor nach einem oder mehreren der Ansprüche 1 bis 10, dadurch gekennzeichnet, daß die Kohlebürsten (7) über isolierte Litzen (9) mit den Sammelringen (10, 11) verlötet sind.

12. Gleichstrommotor nach einem oder mehreren der Ansprüche 1 bis 11, dadurch gekennzeichnet, daß die Kohlebürsten (7) entsprechend den Wicklungsstäben im Wicklungskopf (2b) schräg gestellt sind.

13. Gleichstrommotor nach einem oder mehreren der Ansprüche 1 bis 12, dadurch gekennzeichnet, daß jeder Sammelring (10, 11) über mehrere Anschlußkabel (12, 13) versorgt wird.

14. Gleichstrommotor nach einem oder mehreren der Ansprüche 1 bis 13, dadurch gekennzeichnet, daß die Kohlebürsten (7) anwechselnd mit je einem Sammelring (10, 11) verbunden sind.

15. Gleichstrommotor nach einem oder mehreren der Ansprüche 1 bis 13, dadurch gekennzeichnet, daß die Kohlebürsten (7) gruppenweise mit je einem Sammelring (10, 11) verbunden sind.

16. Gleichstrommotor nach Anspruch 15, dadurch gekennzeichnet, daß mehr als zwei Gruppen von Kohlebürsten (7) gebildet sind, die sektorenweise längs des Umfangs des Magnetträgerringes (4) angeordnet sind.

17. Gleichstrommotor nach Anspruch 15, dadurch gekennzeichnet, daß lediglich zwei Gruppen von Kohlebürsten (7) gebildet sind, die jeweils längs maximal des halben Umfangs des Magnetträgerringes (4) verlaufen.

18. Gleichstrommotor nach einem oder mehreren der Ansprüche 14 bis 17, dadurch gekennzeichnet, daß die Sammelringe (10, 11) sektoral entsprechend der Anordnung der Kohlebürsten (7) verlaufen.

19. Gleichstrommotor nach Anspruch 3, dadurch gekennzeichnet, daß sowohl der Spulenträgerring (1) als auch der Magnetträgerring (4) nur zu einem Teil waagerecht ausgeführt sind und auch senkrechte Teile aufweisen.

**Revendications**

1. Moteur de commande directe, à courant continu, à excitation permanente, sans accouplement mécanique, à centre libre, présentant un anneau porte-bobine (1) sur lequel est agencé un enroulement à courant continu (2), et un anneau porte-aimants 4 comportant plusieurs aimants permanents (5), qui sont reliés à rotation l'un à l'autre via un palier (3), une tête (2b) de l'enroulement (2) opérant directement à titre de commutateur avec des balais de carbone (7), caractérisé en ce que l'anneau porte-bobine 1 est réalisé sous la forme d'une pièce d'acier massif et présente un épaississement qui reçoit l'enroulement à courant continu (2) et qui comporte des gorges (14), des aimants permanents (5) sont fixés mécaniquement sur l'anneau porte-aimants (4), en regard de l'épaississement de l'anneau porte-bobine (1), dans des évidements fraisés ou des alésages de l'anneau porte-aimants (4) et sont de préférence fixés par collage, l'anneau porte-bobine (1) jouant le rôle de stator et d'anneau externe du moteur à courant continu, et les balais de carbone (7) logés dans plusieurs porte-balai (6) le long de l'anneau porte-aimants (4), qui est doté de deux anneaux collecteurs (10, 11), sont reliés respectivement à un anneau collecteur (10, 11), les anneaux collecteurs (10, 11) étant alimentables en tension positive ou négative via les câbles de raccordement (12, 13) et les aimants permanents (5) étant conformés de manière alternée en pôle nord (N) et en pôle sud (S) sur la périphérie de l'anneau porte-aimants (4).

2. Moteur à courant continu selon la revendication 1, caractérisé en ce que l'anneau porte-bobine (1) et l'anneau porte-aimants (4) sont tous deux installés perpendiculairemant au plan de rotation.

3. Moteur à courant continu selon la revendication 1, caractérisé en ce que l'anneau porte-bobine (1) ainsi que l'anneau porte-aimants (4) sont installés parallèlement au plan de rotation.

4. Moteur à courant continu selon une ou plusieurs des revendications 1 à 3, caractérisé en ce que les gorges (14) de l'enroulement (2) sont disposées en oblique vis-à-vis de l'axe de rotation ou vis-à-vis des rayons.

5. Moteur à courant continu selon une ou plusieurs des revendications 1 à 4, caractérisé en ce que les pôles (N, S) de l'anneau porte-aimants (4) sont disposés en oblique vis-à-vis de l'axe de rotation ou des rayons.

6. Moteur à courant continu selon une ou plusieurs des revendications 1 à 5, caractérisé en ce que le nombre d'aimants permanents (5) est égal au nombre de balais de carbone (7).

7. Moteur à courant continu selon une ou plusieurs des revendications 1 à 5, caractérisé en ce que le nombre des balais de carbone (7) est moindre de manière quelconque que le nombre des aimants permanents (5).

8. Moteur à courant continu selon une ou plusieurs des revendications 1 à 7, caractérisé en ce que les balais de carbone 7 ne sont agencés que sur une partie de la périphérie de l'anneau porte-aimants (4).

9. Moteur à courant continu selon une ou plusieurs des revendications 1 à 8, caractérisé en ce que l'enroulement (2) est conformé en enroulement ondulé avec une couche supérieure et une couche inférieure constituées de barres de cuivre massif.

10. Moteur à courant continu selon une ou plusieurs des revendications 1 à 9, caractérisé en ce que les anneaux collecteurs (10, 11) sont agencés de manière à être isolés électriquement dans une ou plusieurs gorges qui parcourent tout l'anneau porte-aimants (4).

11. Moteur à courant continu selon une ou plusieurs des revendications 1 à 10, caractérisé en ce que les balais de carbone (7) sont reliés aux anneaux collecteurs (10, 11) via des cordons isolés (9).

12. Moteur à courant continu selon une ou plusieurs des revendications 1 à 11, caractérisé en ce que les balais de carbone (7) sont installés en oblique de manière à correspondre aux barres de la tête d'enroulement (2b).

13. Moteur à courant continu selon une ou plusieurs des revendications 1 à 12, caractérisé en ce que chaque anneau collecteur (10, 11) est doté de plusieurs câbles de raccordement (12, 13).

14. Moteur à courant continu selon une ou plusieurs des revendications 1 à 13, caractérisé en ce que les balais de carbone (7) sont reliés à un anneau collecteur respectif (10, 11) de manière alternée.

15. Moteur à courant continu selon une ou plusieurs des revendications 1 à 13, caractérisé en ce que les balais de carbone (7) sont reliés à un anneau collecteur respectif (10, 11) en groupes.

16. Moteur à courant continu selon la revendication 15, caractérisé en ce que l'on forme plus de deux groupes de balais de carbone (7) qui sont agencés de manière sectorielle sur la périphérie de l'anneau porte-aimants (4).

17. Moteur à courant continu selon la revendication 15, caractérisé en ce que l'on utilise simplement deux groupes de balais de carbone (7) qui s'étendent respectivement au maximum le long de la demi-périphérie de l'anneau porte-aimants (4).

18. Moteur à courant continu selon une ou plusieurs des revendications 14 à 17, caractérisé en ce que les anneaux collecteurs (10, 11) s'étendent de manière sectorielle en fonction de l'agencement des balais de carbone (7).

19. Moteur à courant continu selon la revendication 3, caractérisé en ce que l'anneau porte-bobine (1) et l'anneau porte-aimants (4) ne sont réalisés parallèlement que sur une partie et présentent également des parties perpendiculaires.

## Claims

1. Non-form-fitting, permanently-excited direct-current motor in centre-free form as a direct drive having a coil carrier ring (1) on which a direct-current winding (2) is disposed, and a magnet carrier ring (4) having a plurality of permanent magnets (5), which are connected to one another by way of a pivot bearing (3) so as to be rotatable, wherein a winding head (2b) of the direct-current winding (2) cooperates directly as a commutator with carbon brushes (7), characterised in that the coil carrier ring (1) is in the form of a solid iron part and has an enlarged portion which is provided with grooves (14) and receives the direct-current winding (2), and on the magnet carrier ring (4) opposite the enlarged portion of the coil carrier ring (1) permanent magnets (5) are disposed in a form-fitting manner in milled slots or bores of the magnet carrier ring (4) and are preferably secured by adhesive, wherein the coil carrier ring (1) acts as the stator and outer ring of the direct-current motor, and the carbon brushes (7) in a plurality of brush holders (6) along the periphery of the magnet carrier ring (4), which is provided with two collecting rings (10, 11), are each connected to a collecting ring (10, 11), wherein the collecting rings (10, 11) can be subjected to positive or negative voltage by way of connecting cables (12, 13), and wherein the permanent magnets (5) along the periphery of the magnet carrier ring (4) are alternatively in the form of the north pole (N) and the south pole (S).

2. Direct-current motor as in claim 1, characterised in that both the coil carrier ring (1) and the magnet carrier ring (4) are perpendicular to the plane of rotation.

3. Direct-current motor as in claim 1, characterised in that both the coil carrier ring (1) and the magnet carrier ring (4) are horizontal to the plane of rotation.

4. Direct-current motor as in one or more of claims 1 to 3, characterised in that the grooves (14) of the winding (2) are disposed inclined to the axis of rotation or the radial.

5. Direct-current motor as in one or more of claims 1 to 4, characterised in that the poles (N, S) of the magnet carrier ring (4) are disposed inclined to the axis of rotation or the radial.

6. Direct-current motor as in one or more of claims 1 to 5, characterised in that the number of permanent magnets (5) is the same as the number of carbon brushes (7).

7. Direct-current motor as in one or more of claims 1 to 5, characterised in that the number of carbon brushes (7) is arbitrarily smaller than the number of permanent magnets (5).

8. Direct-current motor as in one or more of claims 1 to 7, characterised in that the carbon brushes (7) are disposed on only one part of the periphery of the magnet carrier ring (4).

9. Direct-current motor as in one or more of claims 1 to 8, characterised in that the winding (2) is in the form of a wave winding having an upper side and a lower side made of solid copper rods.

10. Direct-current motor as in one or more of claims 1 to 9, characterised in that the collecting rings (10, 11) are disposed in an electrically insulated manner in one or more circular grooves of the magnet carrier ring (4).

11. Direct-current motor as in one or more of claims 1 to 10, characterised in that the carbon brushes (7) are soldered to the collecting rings (10, 11) by way of insulated strands (9).

12. Direct-current motor as in one or more of claims 1 to 11, characterised in that the carbon brushes (7) are inclined in the winding head (2b) in accordance with the winding bars.

13. Direct-current motor as in one or more of claims 1 to 12, characterised in that each collecting ring (10, 11) is supplied by way of a plurality of connecting cables (12, 13).

14. Direct-current motor as in one or more of claims 1 to 13, characterised in that the carbon brushes (7) are connected alternately to each collecting ring (10, 11) respectively.

15. Direct-current motor as in one or more of claims 1 to 13, characterised in that the carbon brushes (7) are connected in groups to each collecting ring (10, 11) respectively.

16. Direct-current motor as in claim 15, characterised in that more than two groups of carbon brushes (7) are formed which are disposed in a sector-like manner along the periphery of the magnet carrier ring (4).

17. Direct-current motor as in claim 15, characterised in that only two groups of carbon brushes (7) are formed, each of which extends along a maximum of half the periphery of the magnet carrier ring (4).

18. Direct-current motor as in one or more of claims 14 to 17, characterised in that the collecting rings (10, 11) extend sectorally in accordance with the arrangement of the carbon brushes (7).

19. Direct-current motor as in claim 3, characterised in that both the coil carrier ring (1) and the magnet carrier ring (4) are horizontal in only one part and also have perpendicular parts.

Fig.1

Fig. 2

Fig. 3

Fig.4